# FASCICULE DE BREVET EUROPEEN

(11) **EP 0 979 673 B1**
(45) Date de publication et mention de la délivrance du brevet: **02.01.2008**
(21) Numéro de dépôt: 99401925.5
(22) Date de dépôt: 27.07.1999
(51) Int. Cl.: B01J 37/02, B01J 35/00, B01J 35/02, B01J 23/00

(54) **Utilisation de catalyseurs supportés dans des réactions de transformation de composés organiques**
Verwendung von Trägerkatalysatoren zur Umsetzung von organischen Verbindungen
Use of supported catalysts in transformation reactions of organic compounds

(30) Priorité: 12.08.1998 FR 9810347
(43) Date de publication de la demande: 16.02.2000
(73) Titulaire: Institut Français du Pétrole, 92500 Rueil Malmaison (FR)
(72) Inventeur: Petit-Clair, Carine, 78360 Montesson (FR); Didillon, Blaise, 92500 Rueil Malmaison (FR); Uzio, Denis, 78160 Marly le Roi (FR)

(56) Documents cités:
- EP-A- 0 002 651
- EP-A- 0 171 296
- EP-A- 0 447 071
- FR-A- 1 004 588

## Description

La présente invention concerne l'utilisation dans une réaction d'hydrogénation de composés comportant des fonctions diéniques des catalyseurs métalliques supportés comprenant au moins un métal, au moins un support et éventuellement un métal alcalin ou alcalino-terreux, qui présente des particules de taille moyenne supérieure à environ 1 nm, et plus de 80 % de particules dont la taille est comprise dans un intervalle D±(D.0,2) où D représente la taille moyenne des particules.

### Description de l'art antérieur :

Les propriétés des catalyseurs métalliques supportés, c'est-à-dire des catalyseurs constitués par un métal ou par plusieurs métaux, déposés sur un support choisi parmi les oxydes réfractaires, le charbon, les polymères ou tout autre matériau, sont conditionnées par un ensemble de paramètres fortement dépendants de la méthode de préparation et des conditions de traitement choisies pour accéder au catalyseur fini.

En ce qui concerne les catalyseurs métalliques supportés, il existe un grand nombre d'exemples dans la littérature démontrant l'influence de la taille des cristallites métalliques sur l'activité du catalyseur final. Cet aspect a été largement détaillé dans Catalysis by Metals and Alloys, V. Ponec, E. Bond, Study in Surface Science and Catalysis, Volume 95, page 280,1995.

Les réactions qui rentrent dans ce cadre, c'est-à-dire pour lesquelles l'activité des atomes métalliques situés à la surface des particules est dépendante de la taille de ces particules, sont dites sensibles à la structure.

Parmi les réactions dans lesquelles on peut utiliser le catalyseur selon l'invention, on peut par exemple citer les réactions d'hydrogénation des composés comportant des fonctions acétyléniques, diéniques, oléfiniques, aromatiques, cétones, aldéhydes, acides ou nitro, l'hydrogénation du monoxyde de carbone en alcools C1-C6, en méthanol ou en diméthyl-éther, les réactions d'isomérisation ou d'hydro-isomérisation, d'hydrogénolyse, et d'une manière générale les réactions faisant intervenir des coupures ou des formations de liaisons carbone-carbone.

Pour toutes ces réactions, il est nécessaire de disposer d'une méthode de préparation simple permettant d'accéder à des catalyseurs présentant une taille de particules métalliques contrôlée, afin d'optimiser au mieux l'activité du catalyseur.

Les procédés conventionnels de préparation des catalyseurs métalliques supportés consistent à déposer un sel métallique ou un complexe de coordination sur le support, puis à réaliser une étape d'activation consistant en des traitements thermiques réalisés sous air et/ou sous hydrogène.

Ils permettent d'accéder à des catalyseurs pour lesquels les tailles des particules sont faibles (inférieures à environ 1 nm) et pour lesquels une fraction importante du métal (supérieure à 80 %) est accessible aux molécules à transformer (J.P. Boitiaux, J. Cosyns, S. Vasudevan, Scientific Bases for the Preparation of Heterogeneous Catalysts, G. Poncelet et al. Editor, pages 123-134, Elsevier,1983).

De tels catalyseurs peuvent être utilisés dans certaines réactions (déshydrogénation des paraffines par exemple) mais ne conduisent pas à des activités élevées pour d'autres réactions (hydrogénation des dioléfines ou des composés acétyléniques par exemple). Pour ces réactions, il est avantageux de disposer d'un catalyseur métallique supporté pour lequel les particules métalliques ont une taille supérieure à environ 1 nm, moins de 80 % du métal engagé étant alors accessible aux molécules à transformer.

Pour atteindre des tailles de particules supérieures à environ 1 nm par les méthodes conventionnelles, il est généralement nécessaire de traiter le catalyseur dans des conditions sévères (augmentation de la température d'activation, traitement en présence de vapeur d'eau), ce qui conduit à un frittage des particules, c'est-à-dire à leur grossissement (J.P. Boitiaux, J. Cosyns, S. Vasudevan, Applied Catalysis, Vol. 6, Page 41 à 51, 1983)

Par cette technique, le grossissement des particules n'est cependant pas bien maîtrisé. Les catalyseurs ainsi obtenus sont constitués de particules dont la taille peut varier dans une large gamme. Ces catalyseurs présentent une fraction de particules de taille inférieure à la taille des particules désirée et dont les atomes situés à la surface sont peu actifs dans la réaction considérée. Ils comprennent également des particules de taille élevée ne présentant qu'une faible fraction d'atomes métalliques accessibles et donc une activité globale faible.

Les procédés de préparation dits conventionnels, c'est-à-dire les procédés dans lesquels un sel métallique ou un complexe de coordination est déposé sur un support, puis subit une procédure d'activation (cf. Z. Karpinski, Adv. Catal., Vol.37, p.45, 1990) ne sont donc pas satisfaisants car ils ne permettent pas d'accéder à des catalyseurs présentant des particules de taille élevée, c'est-à-dire supérieure à environ 1 nm avec une distribution étroite de la taille des particules.

Afin d'améliorer l'activité des catalyseurs, il est donc avantageux de disposer d'une méthode de préparation qui permette d'obtenir des catalyseurs métalliques supportés dont la taille des particules est en moyenne supérieure à environ 1 nm et présentant une distribution en taille étroite.

Les études à caractère fondamental sur les catalyseurs métalliques supportés rapportés dans la littérature montrent que l'interaction entre le métal ou les métaux constituant le catalyseur et le support utilisé conditionne également l'activité du catalyseur (cf. Z. Karpinski, Adv. Catal., Vol.37, p.45, 1990).

Il est généralement admis que pour les réactions, telles que par exemple les réactions d'hydrogénation, de coupure ou de formation de liaison carbone-carbone, une forte interaction entre le métal et le support conduit à une diminution de l'activité du catalyseur. Cette forte interaction entre le métal et le support est généralement conditionnée par la méthode de préparation du catalyseur et, là encore, il est nécessaire de disposer d'une méthode de préparation qui permette de limiter l'interaction entre le métal et le support.

Cette interaction entre le métal et le support peut être caractérisée par un ensemble de techniques de caractérisation connues de l'homme du métier. On peut par exemple citer la thermoréduction programmée qui consiste à déterminer la température de réduction de l'oxyde supporté en métal. Il a en effet été mis en évidence que plus la température de réduction de l'oxyde en métal est élevée, plus l'interaction entre le métal et le support est élevée.

Une autre méthode, plus difficile à mettre en oeuvre, mais donnant une réponse directe est l'EXAFS. Par cette méthode, l'identification du nombre de voisins oxygène autour du métal réduit permet de comparer l'interaction entre le métal et le support pour deux catalyseurs présentant des tailles de particules métalliques voisines, mais issus de méthodes de préparation différentes, et donc de quantifier l'interaction entre le métal et le support.

Le brevet français FR-A-1 004 588 décrit un procédé de préparation de catalyseurs destinés à la synthèse de composés organiques oxygénés. Ce procédé comprend la préparation d'une suspension colloïdale et son imprégnation sur un support, suivie d'un séchage et éventuellement d'un traitement thermique. Ce document ne décrit pas de catalyseurs à base de nickel et/ou de palladium.

La demande de brevet EP-A-0 447 071 décrit un solide utilisable dans un procédé hétérogène de polymérisation d'oléfines. Le catalyseur solide consiste en des particules sphériques présentant un diamêtre moyen en masse compris entre 10 et 100 microns, et une distribution en taille de ces particules telle que le rapport entre le diamêtre moyen en nombre et le diamêtre moyen en masse des particules de catalyseur est au plus égal à 3. Ledit catalyseur comprend à la fois un support, un élément électro-donneur, un métallocène du zirconium, au moins un composé halogèné du titane et/ou de vanadium, et éventuellement un composé du type organoaluminium. Les catalyseurs décrits ne comprennent ni nickel ni palladium.

EP-A-0171296 divulgue des compositions catalytiques présentant des cristallites métalliques de taille moyenne supérieure à 1 nanomètre. Ce document n'enseigne pas spécifiquement le choix de catalyseurs à base de nickel ou de palladium, mais uniquement une longue liste de métaux des groupes IB,IIB,VIB , VIIB et VIII de la classification périodique. Les catalyseurs sont utilisés pour la synthèse de l'ammoniac ou l'hydrogénation du monoxyde de carbone (synthèse Fischer-Tropsch). Enfin, le procédé de préparation du catalyseur selon l'invention n'est pas décrit dans ce document.

### Résumé de l'invention:

La présente invention concerne l'utilisation d'un catalyseur dans un procédé comprenant une réaction d'hydrogénation de composés comportant des fonctions diéniques.

### Description détaillée de l'invention:

Le catalyseur utilisable pour la mise en oeuvre de la présente invention comprend au moins un support et au moins un métal choisi parmi le nickel ou le palladium, et présente des particules métalliques de taille moyenne supérieure à environ 1nm, et plus de 80 % de particules dont la taille moyenne est comprise dans un intervalle D± (D.0,2) où D représente la taille moyenne des particules, et dans lequel ledit catalyseur est préparé au moyen d'un procédé de préparation comprenant les étapes suivantes :
a) préparation d'une suspension colloïdale d'un oxyde métallique en phase aqueuse,
b) dépôt de la suspension colloïdal préparée à l'étape a) par imprégnation sur un support.
c) séchage du produit obtenu à l'étape b).

L'interaction entre le métal et le support des catalyseurs selon l'invention est diminuée par rapport aux catalyseurs préparés au moyen de méthodes conventionnelles.

Le catalyseur peut également éventuellement contenir au moins un métal alcalin, de préférence le lithium, le sodium ou le potassium, et éventuellement au moins un métal alcalino-terreux, de préférence le magnésium, le calcium, le strontium ou la barium.

La teneur en métal du catalyseur est généralement comprise entre 0,01 et 50% poids, de préférence entre 0,01 et 35% poids. Elle est adaptée à la nature du métal et à la réaction envisagée.

La teneur en métal alcalin et/ou alcalino-terreux éventuellement présents est généralement comprise entre 0% et 20% poids, de préférence entre 0% et 10% poids, de manière très préférée entre 0,01 et 5% poids, et de manière encore plus préférée entre 0,05 et 3% poids.

Le support peut être choisi parmi tous les supports déjà décrits dans la littérature pour le type de catalyseur et l'application considérée. On peut par exemple citer, les oxydes réfractaires tels que la silice, l'alumine, la magnésie, les silice-alumines, les silicoaluminates, les charbons, les supports organiques.

Le procédé de préparation des catalyseurs consiste à préparer une suspension colloïdale, en phase aqueuse, de l'oxyde du métal ou des métaux à supporter, puis à déposer cette suspension sur un support, à sécher le précurseur de catalyseur obtenu, et éventuellement à réduire l'oxyde ainsi supporté au moyen de tout composé réducteur, par exemple de l'hydrogène moléculaire.

Dans le procédé de préparation, la suspension colloïdale de l'oxyde métallique est préparée en phase aqueuse et en l'absence de réducteur ou de solvant organique. Par rapport à d'autres procédés de préparation de suspensions colloïdales, le procédé selon l'invention utilise l'eau comme solvant et évite ainsi la manipulation de solvant organique, ainsi que la présence d'agent réducteur lors de la préparation de ladite suspension. Ce procédé présente un avantage au plan de la sécurité, et conduit à des économies en terme de coût du procédé. Lorsqu'elle est souhaitée, une calcination et/ou une réduction peuvent éventuellement être effectuées après dépôt de la suspension colloïdale et séchage du produit obtenu.

Le procédé de préparation des catalyseurs comprend donc plusieurs étapes :
a) préparation d'une suspension colloïdale d'un oxyde métallique en phase aqueuse,
b) dépôt de la suspension colloïdale préparée à l'étape a) par imprégnation sur un support ,
c) séchage du produit obtenu à l'étape b),
suivie éventuellement des étapes suivantes :
d) calcination du produit obtenu à l'étape c), de préférence sous air ou sous azote,
e) réduction du produit obtenu à l'étape c) ou d), de préférence au moyen d'hydrogène gazeux.

Dans la méthode de préparation, la suspension colloïdale est obtenue par hydrolyse d'un cation métallique en milieu aqueux, ce qui conduit à la formation de particules d'oxydes ou d'hydroxydes en suspension.

Selon une procédure préférée, l'hydrolyse peut être par exemple réalisée par neutralisation au moyen d'une base minérale telle que l'ammoniaque ou les hydroxydes d'alcalins comme par exemple la soude et la potasse, d'une solution aqueuse contenant un sel précurseur susceptible de conduire à l'hydroxyde métallique ou à l'oxyde métallique par neutralisation.

Les sels utilisables dans la méthode de préparation selon l'invention sont par exemple les nitrates, les sulfates, les chlorures de ces métaux, ou tout autre sel susceptible de générer un précurseur en solution et pouvant conduire à des hydroxydes ou oxydes qui donnent lieu à la formation de particules en suspension.

La solution contenant la base minérale peut être par exemple versée dans la solution aqueuse contenant le ou les sels métalliques ou, inversement, on peut verser la solution contenant le ou les sels métalliques dans la solution contenant la base minérale. Il est également possible de préparer la suspension colloïdale en versant simultanément les deux solutions dans l'appareillage servant à préparer la suspension colloïdale.

Lors de la préparation de la suspension colloïdale d'oxydes, un ou plusieurs autres sels métalliques peuvent éventuellement être introduits à tout instant de la préparation. Ce ou ces sels peuvent éventuellement conduire à la formation d'oxyde ou d'hydroxyde en milieux aqueux ou ne pas être transformés dans le milieu réactionnel.

D'autres éléments visant à stabiliser la suspension colloïdale peuvent également être introduits lors de la préparation. Parmi ces éléments, on peut par exemple citer, le chlore, les protons, les nitrites, l'ammoniaque, sans que cette liste ne soit limitative.

Après hydrolyse, il est éventuellement possible de laisser la suspension dans un bac sous agitation, éventuellement après modification du pH par ajout de quantités d'acide ou de base compatibles avec la stabilité de la suspension colloïdale.

Lorsqu'il est souhaitable d'éliminer les métaux alcalins ou alcalino-terreux du catalyseur selon l'invention, il est possible d'ajouter à la suspension colloïdale une solution aqueuse au pH ajusté. La suspension ou le précipité obtenu est ensuite filtré et lavé au moyen d'une solution aqueuse, puis si nécessaire remis en suspension dans une autre solution aqueuse dont le pH et la composition sont contrôlés afin d'obtenir à nouveau une suspension colloïdale. Cette suspension peut ensuite être imprégnée. Ces opérations peuvent éventuellement être effectuées en continu.

Lors de la préparation de la suspension colloïdale, le contrôle des paramètres opératoires tels que le pH, le temps, la température, la durée de maturation, l'ajout d'additifs, de préférence des additifs minéraux, à différents moments de la préparation, la concentration du milieu, ou la force ionique permet de contrôler la taille des particules d'oxyde dans le milieu, leur nombre et leur état d'agrégation.

En général, la température de préparation est comprise entre -10°C et 100°C, de préférence entre 0°C et 50°C, et de manière très préférée entre 0°C et 35°C. La durée de maturation peut généralement varier entre 0 et 40 heures, de préférence entre 15 minutes et 24 heures, et la force ionique est de préférence comprise entre 0,005 et 20 moles par litres, de manière plus préférée entre 0,01 et 10 moles par litre.

La suspension contenant le métal ou les métaux sous forme de particules d'oxydes ou d'hydroxydes est ensuite imprégnée sur un support, choisi de préférence parmi les oxydes réfractaires tels que la silice, l'alumine, la magnésie, les silice-alumines, les silicoaluminates, les charbons, les supports organiques.

Le support peut éventuellement subir un ensemble de traitements avant l'étape d'imprégnation, tel que des calcinations ou des hydratations. Le support, peut aussi déjà contenir un ou plusieurs éléments métalliques avant l'imprégnation de la suspension colloïdale. Il est également possible d'introduire ces éléments métalliques dans la suspension colloïdale. Ces éléments métalliques peuvent être introduits soit par des techniques conventionnelles, soit en utilisant le procédé selon la présente invention.

L'imprégnation est de préférence réalisée dans des conditions où le volume de solution correspond environ au volume poreux du support. D'une façon préférée, la suspension colloïdale est versée sur le support. Ce processus peut être réalisé soit de façon discontinue, c'est-à-dire que l'étape de préparation de la suspension colloïdale précède l'étape d'imprégnation sur le support et que l'essentiel de la suspension colloïdale est envoyée en une seule fois vers l'étape d'imprégnation, soit en continu, c'est-à-dire que le produit obtenu dans la première étape est envoyé aussitôt à la seconde étape.

On peut par exemple décrire comme processus continu un processus ou l'hydrolyse est réalisée par neutralisation au moyen d'une base minérale d'une solution contenant un sel métallique. Les deux solutions sont versées simultanément dans un bac qui, par trop plein, se déverse dans une zone contenant le support de catalyseur qui doit être imprégné.

Après imprégnation, le catalyseur est de préférence séché afin d'éliminer tout ou une partie de l'eau introduite lors de l'imprégnation, de préférence à une température inférieure à environ 250°C, de manière plus préférée entre 80°C et 200°C. Après séchage le catalyseur peut éventuellement être calciné, de préférence sous air ou sous azote, à une température comprise entre environ 250°C et environ 900°C, de préférence comprise entre environ 300°C et environ 500°C .
Le catalyseur est ensuite éventuellement réduit. Cette étape est de préférence réalisée en présence d'hydrogène gazeux, et soit in-situ, c'est-à-dire dans le réacteur où est réalisée la transformation catalytique, soit ex-situ, c'est-à-dire dans un outil différent de celui où a lieu la réaction catalytique.
Les catalyseurs métalliques supportés ainsi obtenus, présentent des particules de taille moyenne supérieure à environ 1 nm , et plus de 80 % de particules dont la taille est comprise dans un intervalle D±(D.0,2) où D représente la taille moyenne des particules.

Le catalyseur est utilisé dans un procédé faisant intervenir

une réaction d'hydrogénation des composés comportant des fonctions diéniques.

Les conditions opératoires généralement utilisées pour ces réactions sont les suivantes: une température comprise entre 0°C et 500°C, de préférence entre 25 et 350°C, une pression comprise entre 0,1 et 20 MPa, de préférence entre 0,1 et 10 MPa, une vitesse volumique horaire (V.V.H.) comprise entre 0,1 et 50 h⁻¹, de préférence entre 1 et 20 h⁻¹ pour une charge liquide; et entre 500 et 30 000 h⁻¹, de préférence entre 500 et 15 000 h⁻¹ pour une charge gazeuse. Lorsque de l'hydrogène est présent, le rapport molaire hydrogène sur charge est compris entre 1 et 500 litres par litre, de préférence entre 10 et 150 litres par litre.

La mise en oeuvre du catalyseur et les conditions de son utilisation doivent être adaptées par l'utilisateur à la réaction et à la technologie utilisée. Le catalyseur peut être utilisé soit dans un réacteur à lit fixe opérant en phase gazeuse ou en présence d'au moins une phase liquide tel qu'un réacteur à lit ruisselant (trickle-bed), soit dans un réacteur dans lequel le catalyseur est en suspension dans une phase liquide (réacteur slurry).

Les exemples qui suivent permettent d'illustrer l'invention sans en limiter la portée.

### Exemple 1 (selon l'invention) : Catalyseur monométallique à base de Pd.

Un catalyseur A est préparé en imprégnant une suspension colloïdale d'oxyde de palladium sur une alumine de 70 m²/g. La suspension colloïdale est obtenue en ajoutant de la soude normale à une solution de nitrate de palladium pour atteindre un pH de 2. Le volume de solution utilisé est de 0,6 ml/g d'alumine. Après ajout de la solution de soude, du nitrite de sodium est ajouté avec une stoechiométrie (rapport molaire) NO₂⁻/palladium de 1. La suspension est ensuite versée sur les billes d'alumine qui sont ensuite séchées à 120°C pendant 12h, calcinées pendant deux heures à 450°C sous un flux air avec un débit égal à 1 litre par gramme de catalyseur et par heure (l/gcata.h). Le catalyseur est finalement réduit sous un flux d'hydrogène pendant 2 heures à 200°C.

Le catalyseur ainsi obtenu contient 0,3% poids de palladium et présente des particules de palladium de taille moyenne 2 nm observées en microscopie électronique à transmission avec une distribution en taille très étroite, 90% des particules ayant une taille comprise entre 1,6 nm et 2,4 nm.

### Exemple 2 (comparatif) :

Un catalyseur B est préparé dans les conditions de l'exemple 1 mais en utilisant une solution de nitrate de palladium à pH=0,8. La solution est directement imprégnée sur une alumine de surface spécifique égale à 70 m²/g. Après séchage à 120°C et calcination à 450°C sous air (2 heures), le catalyseur est réduit sous hydrogène à 200°C pendant 2 heures.

Le catalyseur B présente des particules de palladium, observées en microscopie électronique à transmission, qui ont une taille moyenne de 3,5 nm, 60% seulement des particules ayant une taille comprise entre 2,8 nm et 4,2 nm.

### Exemple 3 (selon l'invention) : Catalyseur monométallique à base de Ni.

Un catalyseur C est préparé en imprégnant sur une alumine de 139 m²/g une suspension colloïdale d'oxyde de Ni. Cette suspension est préparée en ajoutant 9.2 cm³ de soude 5 N à une solution de nitrate de nickel à 150g de Ni/l. Le pH avant imprégnation est de 6,5. 5 ml d'eau sont ensuite rajoutés afin d'obtenir un volume de solution de 1,05 ml/g alumine. Le catalyseur est ensuite séché à 120°C pendant 2 heures et calciné à 400°C pendant 2 heures également.

Le catalyseur final contient 8% poids de Ni et la taille moyenne des particules déterminée par chimisorption d'oxygène et par microscopie électronique est de 1,2 nm, avec 87% des particules qui présentent une taille comprise entre 0,95 et 1,45 nm. De plus la répartition du métal à l'intérieur des billes d'alumine est parfaitement homogène.

### Exemple 4 (comparatif) :

Un catalyseur D est préparé en imprégnant une solution de nitrate de nickel de pH initial égal à 3,2 sur le même support que dans l'exemple 3. Après séchage à 120°C et calcination à 400°C sous air (2 heures), le catalyseur est réduit sous hydrogène à 400°C.
Le catalyseur contient 8% poids de nickel, et la taille moyenne des particules est de 8,5 nm, avec 65% de particules ayant une taille comprise entre 6,5 et 10,5 nm.

### Exemple 5 (selon l'invention) : catalyseur Pd-Sn bimétallique.

Un catalyseur E est préparé en imprégnant une suspension colloïdale contenant du palladium et de l'étain. Cette solution est préparée en ajoutant à une solution de soude à pH=14, 0,5 g de SnCl₂, 2H₂O, et ensuite 20 ml d'une solution acide contenant du nitrate de palladium à pH=0,8. Le catalyseur final contient 0,5% poids d'étain et 0,3% poids de palladium.
L'analyse par microscopie électronique montre une taille moyenne des particules de 1,5 nm, avec 88% de particules ayant une taille comprise entre 1,2 et 1,8 nm.

### Exemple 6 (comparatif) : catalyseur Pd-Sn bimétallique.

Un catalyseur F est préparé en imprégnant une solution de nitrate de palladium à pH=0,8 sur une alumine de surface spécifique 70 m2/g. Après séchage à 120°C et calcination à 450°C sous air pendant 2 heures, on imprégne une solution de chlorure d'étain à pH=0,2. Le catalyseur est ensuite séché à 120°C et calciné à 450°C pendant 2 heures
Le catalyseur F obtenu contient 0,3 % poids de palladium, et 0,5% poids d'étain. Il présente une taille moyenne de particules égale à 4 nm, et 55% des particules ont une taille comprise entre 3,2 nm et 4,8 nm.

### Exemple 7 : Evaluation des propriétés catalytiques

Les différents catalyseurs préparés dans les exemples 1 à 4 sont soumis à un test d'hydrogénation d'un composé dioléfinique en réacteur discontinu sans recirculation parfaitement agité. Les conditions opératoires sont les suivantes:
- masse de catalyseur: 2g
- pression d'hydrogène:
   10 bar (catalyseur au palladium),
   20 bar (catalyseur au nickel)
- température:
   17°C (catalyseur au palladium)
   20°C (catalyseur au nickel)
- volume de butadiène: 12 ml
- volume de n-heptane: 180 ml.

L'analyse des produits de la réaction permet de déterminer l'activité des catalyseurs dans les conditions expérimentales précitées et de classer ainsi les différentes préparations. Les résultats sont présentés ci après et donnent les valeurs de l'activité hydrogénante exprimée en moles de butadiène converties par minute et par gramme de métal déposé sur le catalyseur. La sélectivité en butène-1 donnée par le rapport butène-1/somme de butènes à un taux de conversion du butadiène de 80%, ainsi que le rapport des constantes d'hydrogénation du butadiène et du butène (K1/K2) sont également présentés.

| | Activité | Sélectivité | K1/K2* |
|---|---|---|---|
| | mole.min⁻¹.g⁻¹métal | en butène-1 % | |
| Catalyseur A | 5,6 | 59 | 1,5 |
| Catalyseur B | 4,3 | 59 | 1,1 |
| Catalyseur C | 0,19 | 66 | 1,0 |
| Catalyseur D | 0,09 | 66 | 0,9 |
| Catalyseur E | 0,6 | 60 | 12,0 |
| Catalyseur F | 4 | 60 | 1,2 |

| | | | |
|---|---|---|---|
| K1/K2: rapport des constantes de vitesses d'hydrogénation du butadiène et du butène-1 | | | |

Ces résultats montrent que la méthode de préparation selon l'invention permet d'obtenir un gain de performances par rapport aux méthodes de préparation conventionnelles :
- pour les catalyseurs monométalliques à base de palladium ou de nickel, l'activité catalytique est multipliée par un facteur 1,3 à 2 (comparaison A/B et C/D respectivement);
- dans le cas du catalyseur bimétallique palladium-étain, la vitesse d'hydrogénation du butène-1 est très fortement diminuée par rapport à celle d'un catalyseur bimétallique préparé selon une méthode conventionnelle (comparaison E/F), le butadiène est ainsi hydrogéné beaucoup plus rapidement.

## Revendications

1. Utilisation d'un catalyseur comprenant au moins un support et au moins un métal choisi parmi le nickel ou le palladium, dans un procédé comprenant une réaction d'hydrogénation de composés comportant des fonctions diéniques dans lequel ledit catalyseur présente des particules métalliques de taille moyenne supérieure à environ 1 nm, et plus de 80 % de particules dont la taille moyenne est comprise dans un intervalle D±(D.0,2) où D représente la taille moyenne des particules, et dans lequel ledit catalyseur est préparé au moyen d'un procédé de préparation comprenant les étapes suivantes :
a) préparation d'une suspension colloïdale d'un oxyde métallique en phase aqueuse,
b) dépôt de la suspension colloïdale préparée à l'étape a) par imprégnation sur un support.
c) séchage du produit obtenu à l'étape b).

2. Utilisation selon la revendication 1 dans lequel le catalyseur comprend en outre au moins un métal alcalin.

3. Utilisation selon l'une des revendications 1 ou 2 dans lequel ledit catalyseur comprend en outre au moins un métal alcalino-terreux.

4. Utilisation selon l'une des revendications 1 à 3 dans lequel la teneur en métal alcalin ou alcalino-terreux est comprise entre 0 % et 20 % poids.

5. Utilisation selon l'une des revendications 1 à 4 dans lequel la teneur en métal alcalin ou alcalino-terreux est comprise entre 0,01% et 5 % poids.

6. Utilisation selon l'une des revendications 1 à 5 dans lequel ledit procédé de préparation comprend en outre et après l'étape c), au moins une étape d) de calcination du produit obtenu à l'étape c).

7. Utilisation selon la revendication 6 dans lequel ledit procédé de préparation comprend en outre, et après l'une des étapes c) ou d), au moins une étape de réduction du produit obtenu à l'étape c) ou d).

8. Utilisation selon l'une des revendications 1 à 7 dans lequel ladite suspension colloïdale est obtenue par hydrolyse d'un cation métallique en milieu aqueux.

9. Utilisation selon la revendication 8 dans lequel ladite hydrolyse est réalisée par neutralisation au moyen d'ammoniaque, de soude, ou de potasse.

## Claims

1. Use of a catalyst comprising at least one support and at least one metal selected from among nickel and palladium, in a process comprising a reaction for hydrogenation of compounds that comprise dienic functions wherein said catalyst has particles of an average size that is larger than about 1 nm, and more than 80% of particles whose size is included in an interval D±(D.0.2) where D represents the average size of the particles, and wherein said catalyst is prepared according to a preparation process comprising the following steps:
a) preparation of a colloidal suspension of a metallic oxide in aqueous phase,
b) deposition of the colloidal suspension prepared in stage a) by impregnation on a substrate,
c) drying of the product that is obtained in stage b).

2. Use according to claim 1, wherein the catalyst further includes an alkali metal.

3. Use according to claim 1 or 2, wherein the catalyst further includes an alkaline-earth metal.

4. Use according to anyone of claims 1 to 3 wherein the alkali or alkaline earth metal content is comprised between 0% and 20% by weight.

5. Use according to anyone of claims 1 to 4 wherein the alkali or alkaline earth metal content is comprised between 0.01 and 5% by weight

6. Use according to anyone of claims 1 to 5 wherein said preparation process further comprises after stage c), at least one stage d) for calcining the product that is obtained in step c).

7. Use according to claim 6 wherein said preparation process further comprises after one of steps c) or d), at least one step for reduction of the product that is obtained in step c) or d).

8. Use according to anyone of claims 1 to 7 wherein said colloidal suspension is obtained by hydrolysis of a metallic cation in aqueous medium.

9. Use according to claim 8 wherein said hydrolysis is carried out by neutralization by means of ammonia, soda or potash.

## Patentansprüche

1. Verwendung eines Katalysators, der mindestens einen Träger und mindestens ein Metall umfasst, ausgewählt aus Nickel oder Palladium, in einem Verfahren, das eine Hydrierungsreaktion von Verbindungen umfasst, die Dienfunktionen umfassen, wobei der Katalysator Metallteilchen aufweist mit einer mittleren Größe größer als etwa 1 nm, und mehr als 80 % Teilchen, deren Größe innerhalb eines Intervalls D±(D.0,2) liegt, in dem D die mittlere Größe der Teilchen darstellt, und wobei der Katalysator mittels eines Verfahrens zur Herstellung hergestellt wird, das die folgenden Schritte umfasst:
a) Herstellen einer kolloidalen Suspension eines Metalloxids in wässriger Phase,
b) Abscheiden der kolloidalen Suspension, die in Schritt a) hergestellt wurde, durch Imprägnieren auf einen Träger,
c) Trocknen des Produkts, das in Schritt b) erhalten wurde.

2. Verwendung nach Anspruch 1, wobei der Katalysator ferner mindestens ein Alkalimetall umfasst.

3. Verwendung nach einem der Ansprüche 1 oder 2, wobei der Katalysator ferner mindestens ein Erdalkalimetall umfasst.

4. Verwendung nach einem der Ansprüche 1 bis 3, wobei der Gehalt an Alkalimetall oder Erdalkalimetall im Bereich zwischen 0 % und 20 Gew.-% liegt.

5. Verwendung nach einem der Ansprüche 1 bis 4, wobei der Gehalt an Alkalimetall oder Erdalkalimetall im Bereich zwischen 0,01 % und 5 Gew.-% liegt.

6. Verwendung nach einem der Ansprüche 1 bis 5, wobei das Verfahren zur Herstellung ferner und nach Schritt c) mindestens einen Schritt d) des Kalzinierens des Produkts umfasst, das in Schritt c) erhalten wurde.

7. Verwendung nach Anspruche 6, wobei das Verfahren zur Herstellung ferner und nach einem der Schritte c) oder d) mindestens einen Schritt des Reduzierens des Produkts umfasst, das in Schritt c) oder d) erhalten wurde.

8. Verwendung nach einem der Ansprüche 1 bis 7, wobei die kolloidale Suspension durch Hydrolyse eines Metallkations in wässrigem Medium erhalten wird.

9. Verwendung nach Anspruch 8, wobei die Hydrolyse durch Neutralisieren mittels Ammoniak, Soda oder Pottasche realisiert wird.
